# DEMANDE DE BREVET EUROPEEN

(11) **EP 2 108 264 A1**
(43) Date de publication de la demande: **14.10.2009**
(21) Numéro de dépôt: 09157623.1
(22) Date de dépôt: 08.04.2009
(51) Int. Cl.: A23G 3/00, A23G 3/54, A23G 4/20, A23G 3/42, A23G 4/02, A23L 1/00, A61K 9/28

(54) **Procédé de dragéification dure sans sucre optimisée**

(30) Priorité: 10.04.2008 FR 0801988
(71) Demandeur: Roquette Freres, 62136 Lestrem (FR)
(72) Inventeur: Ortiz de Zarate, Dominique, 59660 Merville (FR); Ribadeau-Dumas, Guillaume, 59237 Verlinghem (FR)
(74) Mandataire: Cabinet Plasseraud

(57) **Abrégé**

La présente invention concerne un nouveau procédé de dragéification dure, permettant la création d'un revêtement dur et croustillant à la surface d'un produit en moins de deux heures, et comportant une pluralité de cycles comprenant chacun les étapes suivantes :
- une étape d'application d'un sirop de dragéification contenant au moins un polyol, ledit polyol étant obtenu par hydrogénation de disaccharides, et ledit sirop de dragéification ayant une teneur en matières sèches entre 60 et 90% en poids, de préférence entre 70% et 85% en poids ;
- une étape de séchage comprenant l'utilisation d'un air à une température comprise entre 40°C et 70°C, pendant une durée d'au moins 1 minute et au plus de 5 minutes ;

le nombre de cycles étant tel que l'on obtienne un taux de grossissage supérieur à 25%, préférentiellement supérieur à 30%, et plus préférentiellement supérieur à 32%.

Une variante du procédé selon l'invention consiste à ajouter après application du sirop une quantité de poudre de polyol de très haute pureté.

L'invention vise également les produits revêtus obtenus par utilisation du procédé.

## Description

### DOMAINE DE L'INVENTION

La présente invention a pour objet un procédé de dragéification dure. Plus précisément, l'invention a pour objet un nouveau procédé de dragéification dure sans sucre utilisant un ou plusieurs polyols et permettant de réduire considérablement la durée de fabrication tout en obtenant un produit de qualité. Elle vise également les produits revêtus obtenus par application du procédé.

### ARRIERE-PLAN TECHNOLOGIQUE

La dragéification dure est une opération unitaire employée dans bon nombre de domaines et notamment en confiserie ou en pharmacie. Elle peut concerner également l'industrie des additifs que sont les arômes, les édulcorants, les vitamines, les enzymes, les acides et les produits à base de plantes. Cette opération consiste à créer un revêtement dur à la surface de produits solides ou pulvérulents, afin de les protéger pour diverses raisons ou bien afin de les rendre attractifs visuellement ou gustativement.

La dragéification dure vise à obtenir une couche croustillante et sucrée, toujours très appréciée dans le cas de confiseries comme les chewing-gums par exemple.

L'enrobage du noyau est effectué dans une cuve tournant autour de son axe et appelée drageuse, à l'intérieur de laquelle se trouve une pluralité de noyaux formant une masse en mouvement, à la surface de laquelle on répartit à l'état liquide la matière constitutive de la future enveloppe.

La dragéification dure nécessite toujours l'utilisation d'un sirop contenant des matières cristallisables. Le revêtement dur et cristallin s'obtient par application de ce sirop et évaporation de l'eau apportée par celui-ci.

Le terme dragéification dure employé dans la présente invention comprendra également les techniques très voisines que sont le lissage et le givrage. Le lissage consiste en une ou deux applications ou charges d'un sirop cristallisable dilué par rapport à celui utilisé en dragéification dure. Le but est souvent de parfaire l'aspect de surface de produits dragéifiés. Une dragéification dure est souvent suivie d'un lissage. Le givrage vise également à améliorer l'aspect des produits, mais aussi à isoler ces derniers de l'humidité de l'atmosphère. Cette technique ressemble à une dragéification dure, en ce sens qu'un sirop cristallin est utilisé. La différence essentielle réside dans le fait que le nombre de cycles de dragéification réalisé n'est que d'un, deux ou trois seulement.

La dragéification est un procédé long et laborieux, incluant un grand nombre d'étapes successives. Chacune de ces étapes, appelée également cycle de dragéification, inclue typiquement une phase d'application, généralement par pulvérisation, d'un sirop de dragéification (contenant un ou plusieurs polyols, mais aussi parfois des liants comme la gomme arabique ou la gélatine, des colorants comme le TiO2, des édulcorants intenses...) sur les noyaux, une phase rotative de répartition dudit sirop sur les noyaux appelée également temps de pause, et une phase de séchage de chaque nouvelle couche de sirop réalisée par soufflage d'air chaud et sec. Cette succession de cycles doit être répétée un très grand nombre de fois, de l'ordre de dix à quatre vingt fois, de manière à obtenir le taux de grossissage voulu. Dans la présente invention, le taux de grossissage, encore appelé le taux final d'enrobage, se définit par l'accroissement en poids des produits. Il se calcule par le ratio du poids du produit fini (dragéifié) sur le poids du centre ou du noyau avant dragéification.

La dragéification dure sans sucre est connue depuis longtemps et décrite notamment dans le brevet EP 0 037 407 dont la Demanderesse est titulaire, qui concerne un procédé de dragéification au sorbitol. L'enrobage se fait par cycles successifs comprenant chacun une première phase d'addition de sirop de sorbitol de richesse supérieure à 80% en poids sur sec sur le lit de noyaux, une seconde phase (temps de pause) pendant laquelle l'addition est stoppée, tout en maintenant la rotation de la cuve, et une troisième phase au cours de laquelle l'enveloppe d'enrobage des noyaux est séchée par soufflage d'air chaud et sec, de manière à assurer l'évaporation de l'eau apportée par le sirop et donc la cristallisation du polyol appliqué. Cette technique, bien que satisfaisante en termes de qualité du produit fini, reste longue en pratique, et peut provoquer des problèmes de collage des noyaux entre eux au cours du temps de pause.

Une autre méthode visant à améliorer l'état de la technique, et permettant notamment d'obtenir des produits dragéifiés de très bonne qualité, avec des temps de dragéification relativement courts, et plus courts que les procédés connus de l'art antérieur a été décrite dans la demande de brevet EP 1,481,597 dont la Demanderesse est également titulaire.

Cette méthode permet d'obtenir des revêtements durs et croustillants à la surface d'un noyau, et comporte au moins un cycle de dragéification qui comprend une étape d'application d'un sirop de dragéification de richesse supérieure à 80% (la richesse étant la teneur en polyol concerné sur la teneur en matières sèches du sirop de dragéification) suivie d'une étape de séchage des noyaux et
**caractérisé en ce que** le cycle ne comprend pas de temps de pause entre l'étape d'application du sirop de dragéification et l'étape de séchage des noyaux.

Dans beaucoup de procédés de dragéification, le sirop de dragéification est susceptible de devenir collant lorsqu'il est appliqué sur les noyaux et qu'il commence à sécher. Pour réduire les phénomènes de collage, une poudre de polyol, encore appelée agent de charge, peut-être appliquée après la phase de d'application/pulvérisation du sirop de dragéification sur les noyaux, pour accélérer le séchage du revêtement avant qu'il ne devienne trop collant. Il est à noter que le polyol présent majoritairement dans les sirops de dragéification peut être ou non différent par nature du polyol présent à titre principal dans l'agent de charge. Par contre, le recours à l'ajout d'un agent de charge de nature différente de celui présent dans le sirop de dragéification peut entraîner des défauts de dragéification comme la non obtention d'une couche dure et croustillante. C'est pourquoi cette catégorie de dragéification s'apparente généralement à une dragéification dite tendre.

Dans la demande de brevet EP 0 625 311 dont la demanderesse est titulaire, il est décrit un procédé de dragéification s'apparentant à une dragéification tendre mais permettant d'obtenir des couches dragéifiées hautement cristallines, dures et croustillantes en bouche. Le procédé tel que décrit revendique une succession d'étapes incluant l'application d'un sirop composé, par rapport à sa teneur en matières sèches solubles, d'au moins 90% en poids d'un polyol choisi parmi le sorbitol, le maltitol, le xylitol, l'érythritol et l'isomalt, au moins une étape d'application d'une poudre d'une pureté supérieure à 95% en poids en ce même polyol, une étape de répartition du sirop et de la poudre appliquée, **caractérisé en ce que** ce cycle ne comprend pas d'étape de séchage forcé par un flux d'air. Du fait de la suppression de l'étape de séchage forcé, le procédé est susceptible de générer des gains de temps importants.

Désireuse d'améliorer encore l'état de la technique, et forte des constats énoncés ci-dessus, la Demanderesse s'est aperçue de la nécessité de mettre au point un nouveau procédé de dragéification dure, utilisant avantageusement les polyols en tant qu'agents de remplacement du sucre qui ne présenteraient pas les inconvénients décrits ci-avant et qui combineraient tous les avantages suivants :
- celui d'être très rapide et de permettre de ce fait des gains de temps considérables et donc des gains de productivité importants,
- celui d'être simple à mettre en place industriellement,
- celui d'être facilement reproductible au cours du temps,
- celui de permettre la préparation de produits dragéifiés de très haute qualité, non collants et n'évoluant pas en aspect ou en texture de manière significative au cours du temps.

Désireuse d'améliorer encore l'état de la technique, la Demanderesse s'est donc attachée à réduire davantage les temps de fabrication tout en optimisant la qualité des produits finis. Et c'est après de longs travaux de recherche qu'elle a constaté que, de façon surprenante et inattendue, et contrairement à ce que l'homme du métier aurait eu coutume de réaliser compte-tenu des résultats décrits dans l'art antérieur, l'on pouvait obtenir des revêtements durs et croustillants sans sucres en un temps de fabrication considérablement réduit, dès lors que sont combinées l'utilisation d'un sirop de dragéification présentant une teneur en matières sèches déterminée et un séchage dans certaines conditions. Optionnellement, il est possible d'utiliser également un agent de charge. Avantageusement selon l'invention, on évite le collage des noyaux entre eux, ou leur déformation sous l'effet de la chaleur comme décrit auparavant dans l'art antérieur.

Ainsi, le procédé de dragéification conforme à l'invention est écourté par rapport aux procédés décrits dans l'art antérieur, étant donné le nombre total de cycles largement diminué, pour un taux de grossissage habituel, et sans pour autant avoir une incidence sur les qualités tant physiques qu'organoleptiques du produit fini.

### RESUME DE L'INVENTION

La présente invention concerne donc un nouveau procédé de dragéification dure, permettant la création d'un revêtement dur et croustillant à la surface d'un produit en moins de deux heures, et comportant une pluralité de cycles comprenant chacun les étapes suivantes :
- (a) une étape d'application d'un sirop de dragéification contenant au moins un polyol, ledit polyol étant obtenu par hydrogénation de disaccharides, et ledit sirop de dragéification ayant une teneur en matières sèches entre 60 et 90% en poids, de préférence entre 70% et 85% en poids ;
- (b) une étape de séchage comprenant l'utilisation d'un air à une température comprise entre 40°C et 70°C, pendant une durée d'au moins 1 minute et au plus de 5 minutes ;
   le nombre de cycles étant tel que l'on obtienne un taux de grossissage supérieur à 25%, préférentiellement supérieur à 30%, et plus préférentiellement supérieur à 32%.

Une variante du procédé selon l'invention consiste à ajouter après application du sirop de dragéification, une poudre de polyol de très haute pureté, de préférence supérieure à 95%.

Elle concerne également les produits obtenus par la mise en oeuvre de ce nouveau procédé de dragéification et/ou d'une de ses variantes.

### DESCRIPTION DETAILLEE DES MODES DE REALISATION

Selon un mode général de réalisation de l'invention, le procédé comporte une succession de cycles répétitifs comportant toujours une première étape consistant à humidifier de façon homogène la surface des produits en mouvement à l'aide du sirop de dragéification choisi, une seconde étape permettant la répartition homogène de ce sirop à la surface des produits (temps de pause), et enfin une troisième étape de séchage par soufflage d'air chaud et sec, assurant l'évaporation de l'eau apportée par le sirop et donc la cristallisation du polyol appliqué.

Selon un mode préférentiel de réalisation, le cycle de dragéification comporte deux étapes supplémentaires : une étape d'application d'une poudre de polyol (typiquement par saupoudrage) après l'application du sirop de dragéification et sa répartition homogène, suivie elle-même par une nouvelle étape permettant la répartition homogène de la poudre (étape de pause), avant de retrouver l'étape finale de séchage par soufflage d'air.

Le terme polyols désigne dans la présente invention, les produits obtenus par hydrogénation catalytique de sucres réducteurs complexes, les disaccharides.

Par conséquent, les polyols concernés par la présente invention sont des sucres-alcools choisis dans le groupe comprenant le maltitol, le maltulose hydrogéné, l'isomaltulose hydrogéné, le lactitol, l'alpha-D-glucopyranosyl-1-6-sorbitol (=1,6-GPS), l'alpha-D-glucopyranosyl 1-1-mannitol (=1,1-GPM), l'alpha-D-glucopyranosyl-1-1-sorbitol (=1,1-GPS) et leurs mélanges.

Dans la présente invention, l'isomaltulose hydrogéné se définit comme tout mélange de 1,1-GPM et de GPS (1,6-GPS et 1,1-GPS), quelque soit le ratio de chaque composé dans ledit mélange.

Selon un mode particulier de l'invention, les polyols du sirop de dragéification contiennent un mélange GPM-GPS dans un ratio compris entre 50/50 et 25/75.

Ces polyols sont obtenus industriellement par hydrogénation de maltose, de maltulose, d'isomaltulose, du lactose.

L'invention concerne un procédé de dragéification dure sans sucre, permettant la création d'un revêtement dur à la surface d'un noyau en moins de deux heures, et comportant une pluralité de cycles comprenant chacun les étapes suivantes :
- (a) une étape d'application d'un sirop de dragéification contenant au moins un polyol, ledit polyol étant obtenu par hydrogénation de disaccharides, et ledit sirop de dragéification ayant une teneur en matières sèches entre 60 et 90% en poids, de préférence entre 70 et 85% en poids ;
- (b) une étape de séchage comprenant l'utilisation d'un air à une température comprise entre 40°C et 70°C, pendant une durée d'au moins 1 minute et au plus de 5 minutes ;
   le nombre de cycles étant tel que l'on obtienne un taux de grossissage supérieur à 25%, préférentiellement supérieur à 30%, et plus préférentiellement supérieur à 32%.

On utilisera de préférence un sirop de dragéification présentant une richesse en polyol d'au moins d'au moins 80% en poids sur sec, de préférence d'au moins 85%, plus préférentiellement d'au moins 90% et encore plus préférentiellement d'au moins 92%.

Le sirop de dragéification peut être préparé à partir de tous polyols commercialisés par la Demanderesse sous forme de poudre sous les marques MALTISORB^{®} pour le maltitol et

ISOMALTISORB^{®} pour l'isomaltulose hydrogéné. On peut également utiliser des sirops prêts à l'emploi tels que par exemple des sirops de maltitol à hautes teneurs en maltitol. La teneur en matières sèches du sirop de dragéification est comprise entre 60 et 90%, de préférence encore entre 70 et 85%, et plus préférentiellement encore supérieure ou égale à 76% et inférieure à 80%.

Le sirop mis en oeuvre est porté à une température inférieure à 100°C avant application. Dans un mode de réalisation avantageux, la température du sirop est comprise entre 75°C et 95°C, et de manière plus avantageuse encore entre 85°C et 93°C. Il est par exemple appliqué par pulvérisation.

Le cycle de dragéification selon la présente invention comporte au moins une étape de séchage comprenant l'utilisation d'un air à une température comprise entre 40°C et 70°C, de préférence entre 45°C et 55°C, pendant une durée d'au moins 1 minute et d'au plus 5 minutes.

Selon un mode de réalisation, l'étape (b) comprend l'utilisation d'un air à une température comprise entre 45°C et 60°C, et de préférence entre 47 et 53°C.

Selon un mode de réalisation, l'ensemble des étapes de séchage du procédé objet de la présente invention comprend l'utilisation d'un air à au moins 45°C et au plus 55°C, pendant une durée cumulée d'au moins 10 minutes, et de préférence d'au moins 15 minutes.

Selon un mode particulièrement avantageux de la présente invention, la température de l'air est de 50°C, et la durée totale cumulée de soufflage de cet air à 50°C est de 15 minutes.

En dehors de ces phases dites « chaudes », la température régnant dans le lit en mouvement de noyaux à enrober est maintenue pendant toute la majorité du procédé de dragéification à une température comprise entre 10°C et 50°C, et de préférence entre 15 et 40°C.

Il est évident également que plus l'air insufflé dans la turbine est sec, et plus le procédé est rapide.

Le taux de grossissage souhaité peut être choisi librement en fonction de la nature du noyau à dragéifier ou des effets recherchés.

Selon un mode de réalisation particulier de la présente invention, des taux de grossissage supérieurs à 25% sont obtenus en moins d'une heure trente minutes.

Selon un mode de réalisation, le polyol de l'étape (a) est le maltitol.

Selon un mode préférentiel de la présente invention, les noyaux à enrober sont constitués de chewing gums, et les taux de grossissage recherchés sont compris entre 20 et 50%, de préférence entre 30% et 45%, et plus préférentiellement entre 30% et 40%.

Selon un autre mode préférentiel de l'invention, les noyaux à enrober sont constitués de confiseries comme des pâtes à mâcher, des caramels, des comprimés et les taux de grossissage recherchés sont compris entre 24 et 40%.

Selon un autre mode préférentiel de la présente invention, les noyaux à enrober sont constitués de fruits secs, et les taux de grossissage recherchés sont compris entre 50 et 85%, de préférence entre 60 et 75%.

Une variante du procédé selon l'invention consiste à ajouter après application du sirop de dragéification une poudre de polyol (typiquement par saupoudrage), de haute pureté, de préférence supérieure à 95% en poids.

Ainsi, selon un mode de réalisation, la présente invention concerne un procédé de dragéification tel que décrit ci dessus, **caractérisé en ce qu**'il comprend en outre un ou plusieurs cycles comprenant chacun les étapes suivantes :
- (a) une étape d'application d'un sirop de dragéification contenant au moins un polyol, le polyol étant obtenu par hydrogénation de disaccharides, ledit sirop de dragéification ayant une teneur en matières sèches entre 60 et 90% en poids, de préférence entre 70 et 85% en poids ;
- (a-1) une étape d'application d'une poudre contenant au moins un polyol de pureté supérieure à 95% ;
- (b) une étape de séchage comprenant l'utilisation d'un air à une température comprise entre 40°C et 70°C, pendant une durée d'au moins 1 minute et au plus de 5 minutes.

Selon un mode préférentiel, ladite poudre présente une pureté supérieure à 98%, et de préférence supérieure à 99%.

Selon un mode de réalisation, le polyol de l'étape (a-1) est choisi dans le groupe constitué par le maltitol, le maltulose hydrogéné, l'isomaltulose hydrogéné, le lactitol, l'alpha-D-glucopyranosyl-1-6-sorbitol (=1,6-GPS), l'alpha-D-glucopyranosyl 1-1-mannitol (=1,1-GPM), l'alpha-D-glucopyranosyl-1-1-sorbitol (=1,1-GPS), et leurs mélanges.

Selon un mode particulier de l'invention, la poudre de polyol de l'étape (a-1) contient un mélange de 1,1-GPM et de GPS (1,6-GPS et 1,1-GPS).

Concernant la poudre de polyol de l'étape (a-1), il est préférable d'utiliser des poudres fines, présentant moins de 60% de particules de diamètre supérieur à 250 microns.

Selon un mode de réalisation particulier du procédé, les sirops de dragéification appliqués peuvent être préparés à partir de la poudre de polyol appliquée de l'étape (a-1) convenant au procédé suivant l'invention.

Selon un autre mode de réalisation particulier du procédé, ladite poudre de polyol et ledit sirop de dragéification possèdent un polyol « en commun », c'est-à-dire que ladite poudre et ledit sirop contiennent ont un ingrédient polyol commun.

Selon cette variante du procédé combinant l'utilisation d'un sirop et d'une poudre, des taux de grossissage de plus de 30% sont obtenus en moins de 2h heures, et de préférence en moins d'une heure trente minutes, soit deux à trois fois moins que les procédés de l'art antérieur.

Selon un mode de réalisation, le sirop de dragéification de l'étape (a) et/ou la poudre de polyol de l'étape (a-1) contiennent du maltitol.

Un des objets du procédé de la présente invention est de réduire considérablement les temps d'enrobage.

Selon un mode de réalisation particulier de l'invention, des additifs comme des colorants, des édulcorants intenses ou des arômes peuvent être ajoutés au sirop de polyols à pulvériser. Il est également possible de prévoir d'incorporer des agents liants tels que des gommes végétales, la carboxyméthylcellulose et la gélatine, des amidons et fécules modifiés (de pois, mais, blé, pommes de terre, tapioca, riz...), des maltodextrines, des dextrines comme le NUTRIOSE^{®}, des maltodextrines résistantes comme le FIBERSOL^{®}, du polydextrose, des sirops de maltitol comme le LYCASIN^{®}HBC, des substances grasses telles que des mono et diglycérides.

Un autre mode de réalisation particulier de l'invention peut prévoir le mélange de différents polyols dans le sirop d'enrobage et/ou dans l'agent de charge.

Selon un mode de réalisation particulièrement avantageux de l'invention, le sirop de dragéification peut également contenir des pigments tels que le carbonate de calcium, le dioxyde de titane, ou un colorant alimentaire, ainsi que des édulcorants intenses tels que l'aspartame, l'acésulfame K, la saccharine, le sucralose, l'alitame, le néotame, la néohespéridine, la thaumanine, le cyclamate de sodium ou de calcium, les dérivés de brazzein, les stéviosides.

Une autre variante de l'invention consiste à réaliser une dragéification multicouche, mettant en oeuvre plusieurs polyols différents.

Une autre variante de l'invention consiste à ajouter dans les sirops de dragéification ou dans la poudre de polyols des agents de charge comme le talc, le carbonate de calcium, les silicates d'aluminium ou de magnésium, de sels de Ca, Mg, Na, Zn, Fe, P, Li...

Selon l'invention, les produits à dragéifier sont soumis à un turbinage, c'est-à-dire à un mouvement de rotation dans une turbine de dragéification. Celle-ci peut avoir une forme ordinaire, c'est-à-dire une forme en tulipe avec un axe de révolution incliné ou bien une forme cylindrique avec un axe horizontal. Les noyaux présentent une forme sphérique, cylindrique ou ovale afin de faciliter l'opération d'enrobage mais peuvent aussi bien avoir une forme en coussinet ou en pastille. Ces noyaux, traditionnels, allégés en sucres ou sans sucre peuvent contenir un fourrage liquide, pâteux ou pulvérulent.

Il est à noter que les noyaux ou produits à dragéifier peuvent éventuellement subir une étape de gommage consistant à fixer sur le noyau une couche de substances adhésives qui permettront une meilleure fixation des couches d'enrobage lors de l'étape de grossissage ou dragéification. Bien entendu, après le procédé de grossissage, il est possible de procéder à une étape de lustrage ou polissage en vue de protéger l'enrobage de l'humidité et de lui donner un bel aspect brillant, en utilisant par exemple des corps gras, des laques ou des cires.

Les noyaux peuvent également subir une étape de pelliculage, par exemple avec de l'amidon de pois modifié commercialisé par la demanderesse sous la marque LYCOAT^{®} et des pigments comme ceux commercialisés par la société MERCK sous la marque CANDURIN^{®}.

Le procédé conforme à l'invention permet d'enrober tous types de produits, comme notamment des produits alimentaires tels que des confiseries, chewing gums, bubble gums, comprimés, lozenges, articles gélifiés, pâtes à mâcher, bonbons durs, produits chocolatés, des fruits secs tels que amandes, noisettes, arachides, des produits pharmaceutiques ou vétérinaires comme les pilules, tablettes, produits pour animaux, des produits diététiques tels que les granulés de plantes, des semences ou des graines, des poudres d'engrais agglomérées, des additifs à base d'enzymes ou de microorganismes comme les levures, des tablettes détergentes, des vitamines, des arômes, des parfums, acides, édulcorants ou principes actifs divers.

La mise en oeuvre de l'invention telle que décrite ci-avant permet d'obtenir des produits dragéifiés de très bonne qualité avec des temps de dragéification considérablement réduits, et plus courts que les procédés décrits dans l'art antérieur.

Ainsi, la présente invention concerne un chewing gum enrobé d'une couche dure et cristalline obtenue par la mise en oeuvre du procédé décrit ci-dessus. Plus généralement, la présente invention concerne donc une dragée obtenue par la mise en oeuvre du procédé décrit ci-dessus, notamment dans laquelle le noyau est choisi parmi le groupe constitué de chewing gums, bubble gums, pastilles, comprimés, sucres cuits, gommes, pâtes à mâcher, caramel, chocolat, fruits secs, légumes secs, graines et principes actifs.

L'invention sera mieux comprise à l'aide des exemples suivants qui se veulent illustratifs mais non limitatifs.

### EXEMPLE 1 : Dragéification dure avec Maltitol (Arôme menthe)

### Matériel utilisé : drageuse DRIACOATER 1200 contenant 50 Kg de coussinets de chewing gums

### 1. Composition du sirop de dragéification :

### (76% Matières sèches - 90°C)

| | *Ingrédients en poids* | *Composition en matières sèches* |
|---|---|---|
| Maltitol MALTISORB^{®}P200 | 25.000 kg | 95.0% |
| Dioxyde de titane | 0.263 kg | 1.0% |
| Gomme Arabique (40%MS) | 1.980 kg | 3.0% |
| Sorbitol NEOSORB^{®}70/02 | 0.373 kg | 1.0% |
| Eau | 7.015 kg | |
| | | 100.00 |

| | | |
|---|---|---|
| Le NEOSORB^{®}70/02 est ajouté dans le sirop de dragéification pour améliorer la résistance au chipping comme décrit dans le brevet européen EP 1 399 032 dont est titulaire la Demanderesse. | | |

### 2. Paramètres et séquence d'enrobage (50 Kg de chewing gums)

### Phase 1 = dépoussiérage et préchauffage

| | | | | | | | | | |
|---|---|---|---|---|---|---|---|---|---|
| Phase | 2 | 3 | 4 | 5 | 6 | 7 | 8 | 9 | 10 |
| Nombre de cycles | 3 | 2 | 5 | 2 | 5 | 2 | 3 | 3 | 1 |
| Quantité de sirop par cycle (Kg) | 0,8 | 1.0 | 1.2 | 1.0 | 1.4 | 1.0 | 1.4 | 0.8 | cire |
| Pause (min) | 0.5 | 0.5 | 0.5 | 1.0 | 0.5 | 1.0 | 0.5 | 3.0 | |
| Agent de charge(Kg) Maltisorb^{®} P35 | 0.50 | 0.50 | 0.50 | 0 | 0.40 | 0 | 0.25 | 0 | 0 |
| Pause (min) | 0.5 | 0.5 | 0 | 0 | 0.5 | 0 | 1.5 | 0 | 5 |
| Temps de séchage (min) | 3.0 | 3.0 | 3.0 | 3.0 | 3.0 | 2.0 | 1.5 | 1.0 | 5 |
| Température air de séchage (°C) | 28 | 36 | 42 | 50 | 50 | 50 | 50 | 26 | 26 |
| Débit d'air / m³ / min | 15 | 15 | 15 | 15 | 15 | 15 | 15 | 15 | 15 |
| Vitesse de rotation (t/min) | 10 | 10 | 10 | 10 | 10 | 10 | 10 | 10 | 10 |

De l'arôme menthe a été ajouté à la surface des noyaux au cours des phases 5 et 7.

Le temps total de dragéification est de 120 minutes pour un taux de grossissage de 37,5%.

Le point de rosée de l'air de séchage est de -11°C.

Le même taux de grossissage a été obtenu selon un procédé de dragéification dit classique, comme ceux décrits dans l'art antérieur cité ci-avant en 210 minutes.

L'intérêt de la présente invention est démontré par le présent exemple.

### EXEMPLE 2 : Dragéification dure avec Maltitol (Arôme menthe)

### Matériel utilisé : drageuse DRIACOATER 1200 contenant 50 Kg de chewing gums sans sucre

### 1. Composition du sirop de dragéification :

### (78% Matières sèches - 90°C)

| | *Ingrédients en poids* | *Composition en matières sèches* |
|---|---|---|
| Maltitol MALTISORB^{®}P200 | 25.000 kg | 94.0% |
| Dioxyde de titane | 0.263 kg | 1.0% |
| Gomme Arabique (40%MS) | 3.290 kg | 5.0% |
| Eau | 5.190 kg | |
| | | 100.00 |

### 2. Paramètres et séquence d'enrobage (50 Kg de chewing gums)

### Phase 1 = dépoussiérage et préchauffage

| | | | | | | | | | |
|---|---|---|---|---|---|---|---|---|---|
| Phase | 2 | 3 | 4 | 5 | 6 | 7 | 8 | 9 | 10 |
| Nombre de cycles | 3 | 3 | 5 | 2 | 5 | 2 | 4 | 3 | 1 |
| Quantité de sirop par cycle (Kg) | 1 | 1.2 | 1.5 | 1.2 | 1.6 | 1.2 | 1.0 | 0.8 | cire |
| Pause (min) | 0.5 | 0.5 | 0.5 | 1.5 | 0.5 | 1.5 | 3 | 3.5 | |
| Agent de charge(Kg) Maltisorb^{®} P35 | 0.50 | 0.50 | 0.50 | 0 | 0.40 | 0 | 0 | 0 | 0 |
| Pause (min) | 0.5 | 0.5 | 0 | 0 | 1.5 | 0 | 0 | 0 | 5 |
| Temps de séchage (min) | 3.0 | 2.5 | 2.5 | 2.5 | 1.5 | 2.0 | 1.0 | 1.0 | 5 |
| Température air de séchage (°C) | 32 | 38 | 45 | 45 | 50 | 50 | 50 | 26 | 26 |
| Débit d'air / m³ / min | 15 | 15 | 15 | 15 | 15 | 15 | 15 | 15 | 15 |
| Vitesse de rotation (t/min) | 10 | 10 | 10 | 10 | 10 | 10 | 10 | 10 | 10 |

De l'arôme menthe a été ajouté à la surface des noyaux au cours des phases 5 et 7.

Le temps total de dragéification est de 120 minutes pour un taux de grossissage de 42,4%.

Le point de rosée de l'air de séchage est de -11°C.

Le même taux de grossissage a été obtenu selon un procédé

de dragéification dit classique, comme ceux décrits dans l'art antérieur cité ci-avant en 220 minutes.

L'intérêt de la présente invention est démontré par le présent exemple.

### EXEMPLE 3 : Dragéification dure avec Maltitol (Arôme menthe)

### Matériel utilisé : drageuse DRIACOATER 1200 contenant 50 Kg de coussinets de chewing gums

### 1. Composition du sirop de dragéification:

### (80% Matières sèches - 90°C)

| | *Ingrédients en poids* | *Composition en matières sèches* |
|---|---|---|
| Maltitol MALTISORB^{®}P200 | 25.000 kg | 89.0% |
| Dioxyde de titane | 0.280 kg | 1.0% |
| LYCASIN^{®}HBC (73% MS) | 3.830 kg | 10.0% |
| Eau | 6.000 kg | |
| | | 100.00 |

### 2. Paramètres et séquence d'enrobage (50 Kg de chewing gums)

### Phase 1 = dépoussiérage et préchauffage

| | | | | | | | | |
|---|---|---|---|---|---|---|---|---|
| Phase | 2 | 3 | 4 | 5 | 6 | 7 | 8 | 9 |
| Nombre de cycles | 2 | 3 | 5 | 2 | 5 | 2 | 4 | 1 |
| Quantité de sirop par cycle (Kg) | 0,8 | 1.2 | 1.4 | 1.4 | 1.6 | 1.2 | 0.8 | cire |
| Pause (min) | 0.5 | 0.5 | 0.5 | 1.5 | 0.5 | 2.0 | 5.0 | |
| Agent de charge Kg) Maltitol P35 | 0.50 | 0.50 | 0.50 | 0 | 0.40 | 0 | 0 | 0 |
| Pause (min) | 0.5 | 0.5 | 1.0 | 0 | 1.5 | 0 | 0 | 5 |
| Temps de séchage (min) | 3.0 | 3.0 | 2.5 | 2.0 | 1.5 | 1.5 | 0 | 10 |
| Température air de séchage (°C) | 32 | 38 | 45 | 50 | 50 | 50 | 35 | 26 |
| Débit d'air / m³ / min | 15 | 15 | 15 | 15 | 15 | 15 | 15 | 15 |
| Vitesse de rotation (t/min) | 10 | 10 | 10 | 10 | 10 | 11 | 11 | 15 |

De l'arôme menthe a été ajouté à la surface des noyaux au cours des phases 5 et 7.

Le temps total de dragéification est de 105 minutes pour un taux de grossissage de 37,4%.

Le point de rosée de l'air de séchage est de -11°C.

Le même taux de grossissage a été obtenu selon un procédé de dragéification dit classique, comme ceux décrits dans l'art antérieur cité ci-avant en 220 minutes.

L'intérêt de la présente invention est démontré par le présent exemple.

### EXEMPLE 4 : Dragéification dure avec Maltitol (Arôme menthe)

### Matériel utilisé : drageuse DRIACOATER 1200 contenant 50 Kg de coussinets de chewing gums

### 1. Composition du sirop de dragéification :

### (76% Matières sèches - 90°C)

| | *Ingrédients en poids* | *Composition en matières sèches* |
|---|---|---|
| Maltitol MALTISORB^{®}P200 | 25.000 kg | 94.0% |
| Dioxyde de titane | 0.266 kg | 1.0% |
| Gomme Arabique (40% MS) | 3.320 kg | 5.0% |
| Eau | 6.400 kg | |
| | | 100.00 |

### 2. Paramètres et séquence d'enrobage (50 Kg de chewing gums)

### Phase 1 = dépoussiérage et préchauffage

| | | | | | | | | | | |
|---|---|---|---|---|---|---|---|---|---|---|
| Phase | 2 | 3 | 4 | 5 | 6 | 7 | 8 | 9 | 10 | 11 |
| Nombre de cycles | 3 | 3 | 4 | 2 | 4 | 2 | 2 | 2 | 2 | 1 |
| Quantité de sirop par cycle (Kg) | 0,9 | 1.2 | 1.5 | 1.3 | 1.5 | 1.3 | 1.2 | 0.8 | 0.4 | cire |
| Pause (min) | 0.5 | 0.5 | 0.5 | 1.5 | 0.5 | 1.5 | 3.0 | 3.0 | 4.0 | |
| Agent de charge(Kg) Maltitol P35 | 0.50 | 0.50 | 0.50 | 0 | 0.40 | 0 | 0 | 0 | 0 | 0 |
| Pause (min) | 0.5 | 0.5 | 0.5 | 0 | 1.0 | 0 | 0 | 0 | 0 | 5 |
| Temps de séchage (min) | 3.0 | 2.5 | 2.0 | 2.0 | 2.0 | 2.0 | 1.0 | 1.0 | 0 | 5 |
| Température air de séchage (°C) | 32 | 38 | 45 | 50 | 50 | 50 | 50 | 32 | 26 | 26 |
| Débit d'air / m³ / min | 15 | 15 | 15 | 15 | 15 | 15 | 15 | 15 | 15 | 15 |
| Vitesse de rotation (t/min) | 10 | 11 | 11 | 11 | 11 | 11 | 11 | 11 | 12 | 15 |

De l'arôme menthe a été ajouté à la surface des noyaux au cours des phases 5 et 7.

Le temps total de dragéification est de 107 minutes pour un taux de grossissage de 35,4%.

Le point de rosée de l'air de séchage est de -11°C.

Le même taux de grossissage a été obtenu selon un procédé de dragéification dit classique, comme ceux décrits dans l'art antérieur cité ci-avant en 225 minutes.

L'intérêt de la présente invention est démontré par le présent exemple.

### EXEMPLE 5 : QUALITES ORGANOLEPTIQUES DES PRODUITS OBTENUS

Tous les chewing gums obtenus par la mise en oeuvre des exemples 1 à 4 cités ci-dessus présentent des caractéristiques organoleptiques tout à fait satisfaisantes.

Qui plus est, la croustillance finale apparaît après 1 à 2 jours après la fin du procédé, ce qui présente un avantage considérable pour le conditionnement desdits produits. En effet, lorsque ces produits sont conditionnés, ils n'ont pas encore leur croustillance finale, ils sont donc moins fragiles et mois sujets aux chocs et aux cassures.

L'intérêt de la présente invention est donc multiple, et également bénéfique pour résoudre les problèmes liés aux cassures lors de l'étape de conditionnement.

## Revendications

1. Procédé de dragéification dure sans sucre, permettant la création d'un revêtement dur à la surface d'un noyau en moins de deux heures, et comportant une pluralité de cycles comprenant chacun les étapes suivantes :
- (a) une étape d'application d'un sirop de dragéification contenant au moins un polyol, ledit polyol étant obtenu par hydrogénation de disaccharides, et ledit sirop de dragéification ayant une teneur en matières sèches entre 60 et 90% en poids, de préférence entre 70 et 85% en poids ;
- (b) une étape de séchage comprenant l'utilisation d'un air à une température comprise entre 40°C et 70°C, pendant une durée d'au moins 1 minute et au plus de 5 minutes ;
le nombre de cycles étant tel que l'on obtienne un taux de grossissage supérieur à 25%, préférentiellement supérieur à 30%, et plus préférentiellement supérieur à 32%.

2. Procédé de dragéification selon la revendication 1 **caractérisé en ce en ce que** le polyol de l'étape (a) est choisi dans le groupe constitué par le maltitol, le maltulose hydrogéné, l'isomaltulose hydrogéné, le lactitol, l'alpha-D-glucopyranosyl-1-6-sorbitol (=1,6-GPS), l'alpha-D-glucopyranosyl 1-1-mannitol (=1,1-GPM), l'alpha-D-glucopyranosyl-1-1-sorbitol (=1,1-GPS), et leurs mélanges.

3. Procédé de dragéification selon l'une quelconque des revendications 1 à 2, **caractérisé en ce que** la teneur en matières sèches dudit sirop de dragéification est supérieure ou égale à 76% et inférieure à 80% en poids.

4. Procédé de dragéification selon l'une quelconque des revendications 1 à 3, **caractérisé en ce que** l'étape (b) comprend l'utilisation d'un air à une température comprise entre 45°C et 60°C, et de préférence entre 47 et 53°C.

5. Procédé de dragéification selon l'une quelconque des revendications 1 à 4, **caractérisé en ce que** l'ensemble des étapes de séchage comprend l'utilisation d'un air à au moins 45°C et au plus 55°C, pendant une durée cumulée d'au moins 10 minutes, et de préférence d'au moins 15 minutes.

6. Procédé de dragéification selon l'une quelconque des revendications 1 à 5, **caractérisé en ce que** les susdit taux de grossissage de 25% sont obtenus en moins d'une heure trente minutes.

7. Procédé de dragéification selon l'une quelconque des revendications 1 à 6, **caractérisé en ce que** le polyol de l'étape (a) est le maltitol.

8. Procédé de dragéification selon l'une quelconque des revendications 1 à 7, **caractérisé en ce qu'**il comprend en outre un ou plusieurs cycles comprenant chacun les étapes suivantes :
- (a) une étape d'application d'un sirop de dragéification contenant au moins un polyol, le polyol étant obtenu par hydrogénation de disaccharides, ledit sirop de dragéification ayant une teneur en matières sèches entre 60 et 90% en poids, de préférence entre 70 et 85% en poids ;
- (a-1) une étape d'application d'une poudre contenant au moins un polyol de pureté supérieure à 95% ;
- (b) une étape de séchage comprenant l'utilisation d'un air à une température comprise entre 40°C et 70°C, pendant une durée d'au moins 1 minute et au plus de 5 minutes.

9. Procédé de dragéification selon la revendication 8, **caractérisé en ce que** le polyol de l'étape (a-1) est choisi dans le groupe constitué par le maltitol, le maltulose hydrogéné, l'isomaltulose hydrogéné, le lactitol, l'alpha-D-glucopyranosyl-1-6-sorbitol (=1,6-GPS), l'alpha-D-glucopyranosyl 1-1-mannitol (=1,1-GPM), l'alpha-D-glucopyranosyl-1-1-sorbitol (=1,1-GPS), et leurs mélanges.

10. Procédé selon l'une quelconque des revendications 8 à 9, **caractérisé en ce que** la pureté de ladite poudre de l'étape (a-1) est supérieure à 98%, et de préférence supérieure à 99%.

11. Procédé selon l'une quelconque des revendications 8 à 10, **caractérisé en ce que** le sirop de l'étape (a) et/ou la poudre de l'étape (a-1) contiennent du maltitol.

12. Procédé de dragéification selon l'une quelconque des revendications 1 à 11, **caractérisé en ce que** le noyau à dragéifier est un produit alimentaire, notamment un chewing-gum, un produit vétérinaire ou pharmaceutique, diététique, une semence ou une graine, une poudre d'engrais ou encore un additif à base d'enzymes, de microorganismes, de vitamines, d'arômes, de parfums, d'acides, d'édulcorants ou de principes actifs.
